# FASCICULE DE BREVET EUROPEEN

(11) **EP 2 935 806 B1**
(45) Date de publication et mention de la délivrance du brevet: **25.01.2017**
(21) Numéro de dépôt: 13811498.8
(22) Date de dépôt: 18.12.2013
(51) Int. Cl.: F01K 1/12, F01K 3/04, F01K 7/14, F01K 7/16, F01K 13/02

(54) **PROCÉDÉ DE COMMANDE D'UNE CENTRALE THERMIQUE AU MOYEN DE SOUPAPES RÉGLANTES**
VERFAHREN ZUM STEUERN EINES THERMISCHEN KRAFTWERKS MIT REGLERVENTILEN
METHOD FOR CONTROLLING A THERMAL POWER PLANT USING REGULATOR VALVES

(30) Priorité: 19.12.2012 FR 1262334
(43) Date de publication de la demande: 28.10.2015
(73) Titulaire: Electricité de France, 75008 Paris (FR)
(72) Inventeur: DUFOSSE, Eve, F-75019 Paris (FR)
(74) Mandataire: Regimbeau
(86) Numéro de dépôt international: PCT/EP2013/077232
(87) Numéro de publication internationale: WO 2014/096097

(56) Documents cités:
- EP-A1- 1 854 964
- FR-A- 1 134 503
- FR-A1- 2 426 158
- JP-A- S 585 415
- US-A- 4 164 848

## Description

### DOMAINE TECHNIQUE GENERAL ET CONTEXTE DE L'INVENTION

L'invention concerne un procédé de commande d'une centrale thermique de production électrique, ladite centrale comportant au moins une source de chaleur pour fournir en énergie thermique un circuit de circulation d'un fluide de travail, ledit circuit comprenant au moins une turbine haute pression mécaniquement reliée à un générateur électrique.

De préférence, le circuit comporte en outre au moins une turbine de pression moindre reliée à un générateur électrique, ladite pression moindre étant inférieure à la haute pression de la turbine haute pression. Typiquement, il y a deux turbines de pression moindre appelées respectivement turbine moyenne pression et turbine basse pression, la turbine moyenne pression étant en aval de la turbine haute pression et en amont de la turbine basse pression.

Habituellement, l'augmentation de la puissance électrique en réponse à un besoin de puissance se fait en augmentant l'ouverture d'une soupape réglante haute pression qui commande l'alimentation en vapeur de la turbine haute pression. La soupape réglante haute pression est en réalité constituée d'un ensemble de soupapes, mais pour des raisons de clarté et de simplicité, la description qui suit fera référence à une soupape ou une vanne pour désigner un ensemble de soupapes ou de vannes, dès lors que les soupapes ou vannes desdits ensembles remplissent une même fonction qui les rend assimilables à une soupape ou une vanne, respectivement.

La soupape réglante haute pression permet de moduler la quantité de vapeur entrant dans la turbine haute pression, et par voie de conséquence dans les turbines de pression moindre en aval de la turbine haute pression, et ainsi permet de faire varier la puissance électrique produite par la rotation des turbines couplées au générateur électrique.

Cependant, la puissance électrique supplémentaire qui peut ainsi être fournie reste limitée, et l'équilibre thermodynamique du cycle de vapeur en est affecté, pouvant conduire à des problèmes de suivi de consigne et/ou de baisse de rendement et/ou de sur-sollicitation matérielle.

Le document FR1134503A divulgue une centrale thermique et un procédé de commande selon l'état de la technique.

### PRESENTATION DE L'INVENTION

Un but général de l'invention est de pallier tout ou partie des défauts des procédés de commande de l'art antérieur.

Il est notamment proposé un procédé de commande d'une centrale thermique de production électrique, ladite centrale comportant au moins une source de chaleur pour fournir en énergie thermique un circuit de circulation d'un fluide de travail, ledit circuit comprenant au moins:
- une turbine haute pression mécaniquement reliée à un générateur électrique,
- une soupape réglante haute pression commandant l'alimentation en vapeur de ladite turbine haute pression à partir d'un surchauffeur haute pression associé à un ballon de stockage haute pression, l'alimentation en fluide dudit ballon de stockage haute pression en provenance d'un générateur de vapeur haute pression étant commandée par une vanne d'alimentation haute pression,
et, en réponse à un besoin de surplus de puissance électrique,
- l'ouverture de la soupape réglante haute pression est augmentée
- l'ouverture de la vanne d'alimentation haute pression est diminuée.

Un tel procédé a l'avantage de permettre de répondre beaucoup plus efficacement à une sollicitation en puissance, tout en limitant les déséquilibres du cycle thermodynamique.

De préférence, le circuit comporte en outre
- au moins une turbine de pression moindre reliée à un générateur électrique, ladite pression moindre étant inférieure à la haute pression de la turbine haute pression,
- une soupape réglante de pression moindre commandant l'alimentation en vapeur de ladite turbine de pression moindre à partir d'un surchauffeur de pression moindre associé à un ballon de stockage de pression moindre, l'alimentation en fluide dudit ballon de stockage de pression moindre en provenance d'un générateur de vapeur de pression moindre étant commandée par une vanne d'alimentation de pression moindre, et en réponse au besoin de surplus de puissance électrique, l'ouverture de la soupape réglante de pression moindre est augmentée.

La réserve de puissance disponible s'en trouve augmentée, ce qui permet de d'apporter de la flexibilité à la conduite de la centrale thermique et à la gestion du réseau électrique.

Ce dispositif est avantageusement complété par les caractéristiques suivantes, prises seules ou en une quelconque de leur combinaison techniquement possible:
- en réponse au besoin de surplus de puissance électrique, l'ouverture de la vanne d'alimentation de pression moindre est augmentée;
- la vapeur dans le ballon de stockage haute pression présente une température comprise entre 300 et 350 °C et une masse volumique comprise entre 60 et 80 kg.m⁻³, et la vapeur dans le ballon de stockage de moindre pression présente une température comprise entre 200 et 250 °C et une masse volumique comprise entre 7 et 11 kg.m⁻³;
- la centrale thermique de production électrique est une centrale à cycle combiné, comprenant une turbine à combustion dont les fumées alimentent des échangeurs de chaleur du circuit;
- une turbine de pression moindre est une turbine moyenne pression située en aval de la sortie de la turbine haute pression et en amont d'une turbine basse pression.

L'invention concerne également un produit programme d'ordinateur comprenant des instructions de code de programme pour l'exécution des étapes du procédé selon l'invention lorsque ledit programme est exécuté sur un ordinateur. Typiquement, ce produit programme d'ordinateur prend la forme d'un support de données lisible par un ordinateur.

L'invention concerne également une centrale thermique de production électrique, ladite centrale comportant au moins une source de chaleur pour fournir en énergie thermique un circuit de circulation d'un fluide de travail, ledit circuit comprenant au moins:
- une turbine haute pression mécaniquement reliée à un générateur électrique,
- une soupape réglante haute pression commandant l'alimentation en vapeur de ladite turbine haute pression à partir d'un surchauffeur haute pression associé à un ballon de stockage haute pression, l'alimentation en fluide dudit ballon de stockage haute pression en provenance d'un générateur de vapeur haute pression étant commandée par une vanne d'alimentation haute pression,
la centrale comporte des moyens de commande de la soupape réglante haute pression et des moyens de commande de la vanne d'alimentation haute pression, et est configurée de telle sorte qu'en réponse à un besoin de surplus de puissance électrique,
- l'ouverture de la soupape réglante haute pression est augmentée
- l'ouverture de la vanne d'alimentation haute pression est diminuée.

De préférence, le circuit comporte en outre
- au moins une turbine de pression moindre reliée à un générateur électrique, ladite pression moindre étant inférieure à la haute pression de la turbine haute pression,
- une soupape réglante de pression moindre commandant l'alimentation en vapeur de ladite turbine de pression moindre à partir d'un surchauffeur de pression moindre associé à un ballon de stockage de pression moindre, l'alimentation en fluide dudit ballon de stockage de pression moindre en provenance d'un générateur de vapeur de pression moindre étant commandée par une vanne d'alimentation de pression moindre, et
la centrale comporte des moyens de commande de la soupape réglante de pression moindre et des moyens de commande de la vanne d'alimentation de pression moindre, et est configurée de telle sorte qu'en réponse au besoin de surplus de puissance électrique, l'ouverture de la soupape réglante de pression moindre est augmentée. De préférence encore, la centrale est configurée de telle sorte qu'en réponse au besoin de surplus de puissance électrique, l'ouverture de la vanne d'alimentation de pression moindre est également augmentée.

### PRESENTATION DES FIGURES

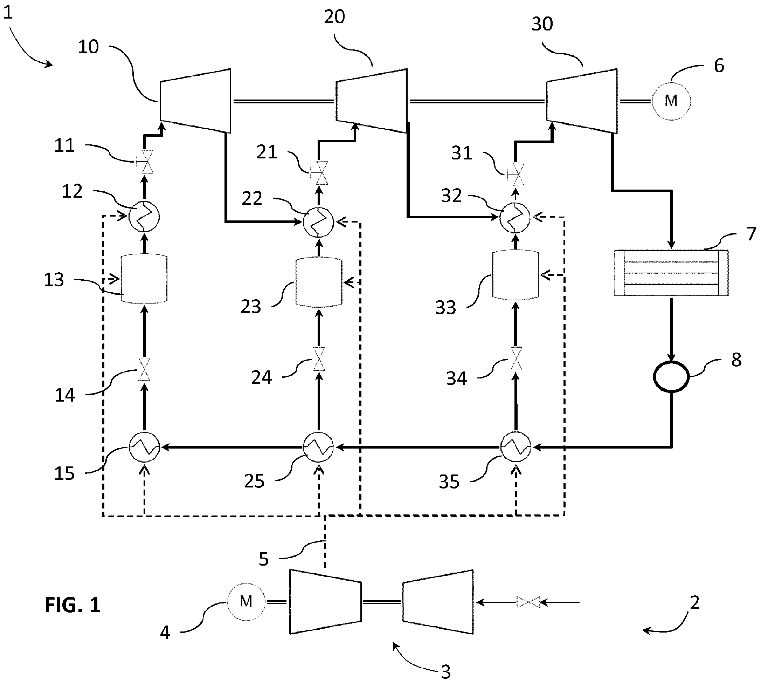

D'autres caractéristiques, buts et avantages de l'invention ressortiront de la description qui suit, qui est purement illustrative et non limitative, et qui doit être lue en regard de la figure 1 qui est un schéma d'ensemble illustrant le principe de fonctionnement d'une centrale thermique de type cycle combiné au gaz avec ses principaux constituants.

### DESCRIPTION DETAILLEE

L'invention sera mieux comprise à la lumière de la description qui suit, laquelle sera faite en référence à la centrale illustrée par la figure 1, avec de l'eau en tant que fluide de travail.

Une telle centrale comporte au moins une partie de combustion 2 pour fournir en énergie thermique un circuit 1 de circulation d'un fluide de travail, en l'occurrence de l'eau sous forme vapeur et liquide. Dans le cas d'espèce, une turbine à combustion 3 est mécaniquement reliée à un générateur 4 pour produire de l'électricité à partir de la combustion d'un gaz. Les fumées 5 issues de cette combustion, une fois passées par la turbine à combustion 3, sont réparties entre différents composants du circuit 1 afin de constituer la source de chaleur pour lesdits composants, en l'occurrence des échangeurs de chaleur remplissant différentes fonctions. Normalement, ces échangeurs de chaleur sont répartis en fonction de la température qu'ils requièrent : les plus chauds étant en amont et les plus froids en aval du trajet des fumées 5. Cependant, pour des raisons de simplicité, le circuit de fumées est simplement représenté par des flèches en pointillés joignant lesdits échangeurs de chaleur pour signaler qu'ils tirent leur chaleur des fumées 5.

Le circuit comporte trois turbines : une turbine haute pression 10, une turbine moyenne pression 20 et une turbine basse pression 30, par lesquelles passe successivement le circuit principal de vapeur.

A la sortie de la turbine basse pression 30, la vapeur est condensée à travers un échangeur de chaleur avec une source froide extérieure, cet échangeur de chaleur constituant un condenseur 7. L'eau liquide engendrée est ensuite pompée par une pompe 8 puis traverse différents échangeurs de chaleur par lesquels cette eau est réchauffée.

Le dernier de ces échangeurs de chaleur est un générateur de vapeur haute pression 15, alimenté en chaleur par les fumées 5. L'eau ainsi réchauffée par ce générateur de vapeur haute pression 15 passe ensuite par une vanne d'admission haute pression 14 qui commande l'alimentation en eau alimentaire d'un ballon de stockage haute pression 13.

Un ballon de stockage contient une partie de l'eau sous forme vapeur et une partie sous forme liquide. Le liquide et la vapeur sont aux mêmes conditions de pression et de température ; le ballon est à l'équilibre thermodynamique. De la chaleur peut être fournie par les fumées 5 afin de maintenir l'équilibre thermodynamique voulu. L'amenée d'eau alimentaire se fait par le fond du ballon de stockage, au niveau de la phase liquide, tandis que la sortie de vapeur se fait par le haut du ballon de stockage, au niveau de la phase vapeur.

La vapeur une fois soutirée du ballon passe ensuite dans un surchauffeur haute pression 12 qui permet de réchauffer la vapeur de manière à obtenir une vapeur beaucoup plus chaude, ce qui augmente le rendement du cycle.

Une soupape réglante haute pression 11 commande l'alimentation en vapeur de la turbine haute pression à partir du surchauffeur haute pression 12.

La vapeur passe ensuite dans la turbine haute pression 10 dans laquelle ladite vapeur est détendue. La turbine haute pression 10 convertit ainsi l'énergie de la vapeur en énergie mécanique pour faire tourner un arbre relié à un générateur d'électricité 6.

En aval du générateur de vapeur haute pression 15 est disposé un générateur de vapeur moyenne pression 25, alimenté en chaleur par les fumées 5, qui réchauffe l'eau liquide.

Une partie de l'eau liquide ainsi réchauffée continue vers le générateur de vapeur haute pression 15 tandis qu'une autre partie de l'eau réchauffée passe par une vanne d'admission moyenne pression 24 qui commande l'alimentation en eau liquide d'un ballon de stockage moyenne pression 23 qui permet de stocker de l'eau à l'équilibre liquide/vapeur.

La vapeur issue du ballon de stockage moyenne pression 23 passe ensuite dans un resurchauffeur moyenne pression 22. Le resurchauffeur moyenne pression 22 reçoit également la vapeur en sortie de la turbine haute pression 10.

Ce resurchauffeur moyenne pression 22 joue ainsi un double rôle : il permet à la fois le réchauffement de la vapeur issue du ballon de stockage moyenne pression 23 (il assure donc la même fonction que le surchauffeur 12 pour la haute pression) mais permet également le réchauffement de la vapeur détendue dans la turbine haute pression 10. En effet, le passage de la vapeur dans une turbine entraine une baisse de température de celle-ci. Grâce au resurchauffeur moyenne pression 22, la vapeur entrant dans la turbine moyenne pression 20 est plus chaude, ce qui augmente le rendement du cycle.

Une soupape réglante moyenne pression 21 commande l'alimentation en vapeur de la turbine moyenne pression 20 à partir du surchauffeur moyenne pression 22.

La vapeur passe donc via la soupape réglante moyenne pression 21 dans la turbine moyenne pression 20, dans laquelle ladite vapeur est détendue. La turbine moyenne pression 20 convertit ainsi l'énergie de la vapeur en énergie mécanique pour faire tourner l'arbre relié au générateur d'électricité 6.

En aval du générateur de vapeur moyenne pression 25 est disposé un générateur de vapeur basse pression 35, alimenté en chaleur par les fumées 5, qui réchauffe l'eau liquide.

Une partie de l'eau liquide ainsi réchauffée continue vers le générateur de vapeur moyenne pression 25 tandis qu'une autre partie passe par une vanne d'admission basse pression 34 qui commande l'alimentation en eau alimentaire d'un ballon de stockage basse pression 33, qui permet de stocker l'eau réchauffée issue du générateur de vapeur basse pression 35.

La vapeur issue du ballon de stockage basse pression 33 passe ensuite dans un resurchauffeur basse pression 32. Le resurchauffeur basse pression 32 reçoit également la vapeur en sortie de la turbine moyenne pression 20.

Ce resurchauffeur basse pression 32 joue ainsi un double rôle : il permet à la fois le réchauffement de la vapeur issue du ballon de stockage basse pression 33 (il assure donc la même fonction que le surchauffeur 12 pour la haute pression) mais permet également le réchauffement de la vapeur détendue dans la turbine moyenne pression 20. En effet, le passage de la vapeur dans une turbine entraine une baisse de température de celle-ci. Grâce au resurchauffeur basse pression 32, la vapeur entrant dans la turbine basse pression 30 est plus chaude, ce qui augmente le rendement du cycle.

Une soupape réglante basse pression 31 commande l'alimentation en vapeur de la turbine basse pression 30 à partir du surchauffeur basse pression 32.

La vapeur passe donc via la soupape réglante basse pression 31 dans la turbine basse pression 30, dans laquelle ladite vapeur est détendue. La turbine basse pression 30 convertit ainsi l'énergie de la vapeur en énergie mécanique pour faire tourner l'arbre relié au générateur d'électricité 6.

La vapeur revient finalement au condenseur 7 pour recommencer un nouveau cycle liquide/vapeur.

En cas de besoin d'augmentation de la puissance électrique, l'ouverture de la soupape réglante haute pression 11 est augmentée. Une ouverture plus importante de la soupape réglante haute pression 11 entraine une augmentation du débit de vapeur sortant du ballon de stockage haute pression 13 et du surchauffeur haute pression 12, donc entrant dans la turbine haute pression 10. Le débit de vapeur est donc augmenté au niveau de la turbine haute pression 10, ce qui augmente momentanément la puissance générée par la centrale.

La vapeur qui sort du ballon de stockage haute pression 13 engendre une baisse de la pression régnant dans ledit ballon de stockage haute pression 13, en raison de la diminution de la quantité de molécules d'eau dans le ballon de stockage haute pression 13. Le ballon étant à l'équilibre thermodynamique, une baisse de pression va être compensée par une montée du niveau du liquide dans le ballon. Afin de compenser cette baisse de pression, on pourrait penser qu'il faudrait ouvrir la vanne d'alimentation haute pression 14 afin de rétablir la pression dans le ballon de stockage haute pression 13 en y augmentant la quantité de molécules d'eau. Or la demanderesse a constaté de façon surprenante qu'une telle opération diminue en fait la pression à l'intérieur dudit ballon 13. De fait, l'eau que l'on injecte dans le ballon est plus froide que celle qui est contenue dans ce dernier. Un tel apport d'eau a tendance à faire baisser la température dans le ballon haute pression 13, et ainsi à changer l'état d'équilibre vers un nouvel état d'équilibre. En raison de l'injection d'eau dans le ballon, la température de saturation va diminuer, ce qui engendre une baisse de la pression de saturation, d'où une température et une pression moindre. Une ouverture de la vanne d'alimentation haute pression 14 engendre ainsi une baisse de la puissance générée due à la baisse de la pression de vapeur.

Par conséquent, afin d'augmenter la puissance générée, il vaut mieux réduire l'ouverture de la vanne d'alimentation haute pression 14. Ainsi, en réponse à un besoin de surplus de puissance électrique,
- l'ouverture de la soupape réglante haute pression 11 est augmentée, et
- l'ouverture de la vanne d'alimentation haute pression 14 est diminuée.

On ouvre donc la soupape réglante haute pression 11 pour augmenter la puissance, tandis qu'on diminue l'ouverture de la vanne d'alimentation haute pression 14, afin de conserver une pression suffisante. La diminution de la pression dans le ballon de stockage est ralentie par la diminution de l'ouverture de la vanne d'alimentation haute pression 14.

Cependant, afin de limiter la baisse de la pression dans le ballon de stockage haute pression 13, la puissance qui peut ainsi être tirée du ballon de stockage haute pression 13 reste limitée. Afin d'augmenter la quantité de puissance générée, on fait alors appel à un ballon de stockage de moindre pression, constitué ici par le ballon de stockage moyenne pression 23 ou basse pression 33, sur lequel on agit concomitamment à l'action sur le ballon de stockage haute pression 13.

De fait, le circuit comprend au moins une turbine de pression moindre reliée au générateur électrique, ladite pression moindre étant inférieure à la haute pression de la turbine haute pression.

Une soupape réglante de pression moindre commande l'alimentation en vapeur de ladite turbine de pression moindre à partir d'un surchauffeur de pression moindre associé à un ballon de stockage de pression moindre, l'alimentation en fluide dudit ballon de stockage de pression moindre en provenance d'un générateur de vapeur étant commandée par une vanne d'alimentation de pression moindre. Dans l'exemple de la figure 1, le fluide de travail est de l'eau.

En réponse au besoin de surplus de puissance électrique,
- l'ouverture de la soupape réglante de pression moindre est augmentée,
- l'ouverture de la vanne d'alimentation de pression moindre est augmentée.

De préférence, on agit sur le ballon de stockage moyenne pression 23 en tant que ballon de pression moindre, et on décrit ici les effets du procédé dans ce cas. Plus généralement, on agira d'abord préférentiellement sur le ballon de stockage présentant la pression la plus proche de celle du ballon haute pression 13, avant d'éventuellement agir sur le ballon de stockage basse pression 33.

Comme dans le cas de la turbine haute pression 10, une ouverture de la soupape moyenne pression 21 entraine une augmentation du débit de vapeur sortant du ballon de stockage moyenne pression 23 qui entre dans la turbine moyenne pression 20, ce qui augmente la puissance générée par la centrale.

Cependant, contrairement au cas de la haute pression, l'ouverture de la vanne d'alimentation moyenne pression 24 entraîne de façon surprenante une hausse de la pression dans le ballon de stockage moyenne pression 23. On obtient donc une hausse de la puissance de la turbine moyenne pression 20 à la fois en raison de l'augmentation de la quantité de vapeur traversant cette turbine moyenne pression 20 et en raison de l'augmentation de pression de ladite vapeur.

Cet effet surprenant est en partie dû au fait que le resurchauffeur moyenne pression 22 est alimenté en vapeur à la fois par le ballon de stockage moyenne pression 23 et par la sortie de la turbine haute pression 10, laquelle sortie voit sa quantité de vapeur augmentée par l'ouverture concomitante de la soupape réglante moyenne pression 21. Du fait de cet apport de vapeur en provenance de la turbine haute pression 10, même sans l'ouverture accrue de la vanne d'alimentation moyenne pression 24, la diminution de la pression dans le ballon de stockage moyenne pression 23 est de beaucoup inférieure à celle dans le ballon de stockage haute pression 13.

L'ouverture accrue de la vanne d'alimentation moyenne pression 24 permet dès lors le maintien, voire l'augmentation, de la pression régnant dans le ballon de stockage moyenne pression 23. En conséquence, la puissance supplémentaire générée peut être maintenue plus longtemps, et permet d'apporter la flexibilité accrue pour le suivi de la consigne de puissance, tant à court terme qu'à long terme. La puissance supplémentaire générée du fait de L'augmentation du débit de vapeur, et éventuellement de la pression de vapeur, au niveau de la turbine moyenne pression 20 peut d'ailleurs compenser la réduction de puissance due à la baisse de la pression au niveau de la turbine haute pression 10.

Les résultats décrits ci-dessus ont été obtenus dans le cadre d'une centrale présentant les conditions de fonctionnement suivantes pour la vapeur, mais le procédé de commande de la centrale peut bien sûr être adapté par l'homme du métier à d'autres configurations présentant des conditions de fonctionnement susceptibles de permettre d'obtenir le résultat escompté:

| | Ballon haute pression | Ballon moyenne pression | Ballon basse pression |
|---|---|---|---|
| Température (°C) | 300-350 | 200-250 | 100-150 |
| Volume de stockage (m³) | 40-50 | 7-11 | 6-10 |
| Masse volumique vapeur (kg/m³) | 60-80 | 10-20 | 1-3 |

La mise en oeuvre du procédé peut être faite au moyen de régulateurs bien connus de l'homme du métier, par exemple plusieurs ou un seul régulateur proportionnel - intégral (PI) ou proportionnel -intégral-dérivé (PID).

## Revendications

1. Procédé de commande d'une centrale thermique de production électrique, ladite centrale comportant au moins une source de chaleur (5) pour fournir en énergie thermique un circuit (1) de circulation d'un fluide de travail, ledit circuit comprenant au moins:
- une turbine haute pression (10) mécaniquement reliée à un générateur électrique (6),
- une soupape réglante haute pression (11) commandant l'alimentation en vapeur de ladite turbine haute pression (10) à partir d'un surchauffeur haute pression (12) associé à un ballon de stockage haute pression (13), l'alimentation en fluide dudit ballon de stockage haute pression (13) en provenance d'un générateur de vapeur haute pression (15) étant commandée par une vanne d'alimentation haute pression (14),
le procédé étant **caractérisé en ce qu'**en réponse à un besoin de surplus de puissance électrique,
- l'ouverture de la soupape réglante haute pression (11) est augmentée
- l'ouverture de la vanne d'alimentation haute pression (14) est diminuée.

2. Procédé de commande selon la revendication précédente, dans lequel le circuit comporte en outre
- au moins une turbine de pression moindre (20) reliée à un générateur électrique (6), ladite pression moindre étant inférieure à la haute pression de la turbine haute pression (10),
- une soupape réglante de pression moindre (21) commandant l'alimentation en vapeur de ladite turbine de pression moindre (20) à partir d'un surchauffeur de pression moindre (22) associé à un ballon de stockage de pression moindre (23), l'alimentation en fluide dudit ballon de stockage de pression moindre (23) en provenance d'un générateur de vapeur de pression moindre (25) étant commandée par une vanne d'alimentation de pression moindre (24),
ledit procédé étant **caractérisé en ce qu'**en réponse au besoin de surplus de puissance électrique, l'ouverture de la soupape réglante de pression moindre (21) est augmentée.

3. Procédé selon la revendication précédente, **caractérisé en ce qu'**en réponse au besoin de surplus de puissance électrique, l'ouverture de la vanne d'alimentation de pression moindre (24) est augmentée.

4. Procédé de commande selon l'une quelconque des revendications précédentes, dans lequel la vapeur dans le ballon de stockage haute pression (13) présente une température comprise entre 300 et 350 °C et une masse volumique comprise entre 60 et 80 kg.m⁻³, et dans lequel la vapeur dans le ballon de stockage de moindre pression (20) présente une température comprise entre 200 et 250 °C et une masse volumique comprise entre 7 et 11 kg.m⁻³.

5. Procédé de commande selon l'une quelconque des revendications précédentes, dans lequel la centrale thermique de production électrique est une centrale à cycle combiné, comprenant une turbine à combustion (3) dont les fumées alimentent des échangeurs de chaleur (12, 15, 22, 25, 32, 35) du circuit (1).

6. Procédé de commande selon l'une des revendications précédentes, dans lequel une turbine de pression moindre (20) est une turbine moyenne pression située en aval de la sortie de la turbine haute pression (10) et en amont d'une turbine basse pression (30).

7. Produit programme d'ordinateur comprenant des instructions de code de programme pour l'exécution des étapes du procédé selon les revendications précédentes lorsque ledit programme est exécuté sur un ordinateur.

8. Centrale thermique de production électrique, ladite centrale comportant au moins une source de chaleur (5) pour fournir en énergie thermique un circuit (1) de circulation d'un fluide de travail, ledit circuit comprenant au moins:
- une turbine haute pression (10) mécaniquement reliée à un générateur électrique (6),
- une soupape réglante haute pression (11) commandant l'alimentation en vapeur de ladite turbine haute pression (10) à partir d'un surchauffeur haute pression (12) associé à un ballon de stockage haute pression (13), l'alimentation en fluide dudit ballon de stockage haute pression (13) en provenance d'un générateur de vapeur haute pression (15) étant commandée par une vanne d'alimentation haute pression (14),
la centrale étant **caractérisé en ce qu'**elle comporte des moyens de commande de la soupape réglante haute pression (11) et des moyens de commande de la vanne d'alimentation haute pression (14), et **en ce qu'**elle est configurée de telle sorte qu'en réponse à un besoin de surplus de puissance électrique,
- l'ouverture de la soupape réglante haute pression (11) est augmentée
- l'ouverture de la vanne d'alimentation haute pression (14) est diminuée.

9. Centrale selon la revendication précédente, dans lequel le circuit comporte en outre
- au moins une turbine de pression moindre (20) reliée à un générateur électrique (6), ladite pression moindre étant inférieure à la haute pression de la turbine haute pression (10),
- une soupape réglante de pression moindre (21) commandant l'alimentation en vapeur de ladite turbine de pression moindre (20) à partir d'un surchauffeur de pression moindre (22) associé à un ballon de stockage de pression moindre (23), l'alimentation en fluide dudit ballon de stockage de pression moindre (23) en provenance d'un générateur de vapeur de pression moindre (25) étant commandée par une vanne d'alimentation de pression moindre (24),
la centrale étant **caractérisé en ce qu'**elle comporte des moyens de commande de la soupape réglante de pression moindre (21) et des moyens de commande de la vanne d'alimentation de pression moindre (24), et **en ce qu'**elle est configurée de telle sorte qu'en réponse au besoin de surplus de puissance électrique, l'ouverture de la soupape réglante de pression moindre (21) est augmentée.

10. Centrale selon la revendication précédente, **caractérisée en ce qu'**en réponse au besoin de surplus de puissance électrique, l'ouverture de la vanne d'alimentation de pression moindre (24) est augmentée.

## Patentansprüche

1. Verfahren zum Steuern eines Wärmekraftwerks zur Stromerzeugung, wobei das Kraftwerk mindestens eine Wärmequelle (5) umfasst, um einen Zirkulationskreislauf (1) eines Arbeitsfluids mit Wärmeenergie zu versorgen, wobei der Kreislauf mindestens Folgendes umfasst:
- eine Hochdruckturbine (10), die mechanisch mit einem Stromgenerator (6) verbunden ist,
- ein Hochdruckregulierventil (11), das die Dampfversorgung der Hochdruckturbine (10) ausgehend von einem Hochdrucküberhitzer (12), der mit einem Hochdruckspeicherkessel (13) assoziiert ist, steuert, wobei die Fluidversorgung des Hochdruckspeicherkessels (13), die von einem Hochdruckdampfgenerator (15) stammt, durch einen Hochdruckversorgungsschieber (14) gesteuert wird,
wobei das Verfahren **dadurch gekennzeichnet ist, dass** als Reaktion auf einen Mehrbedarf an elektrischer Leistung
- das Öffnen des Hochdruckregulierventils (11) erhöht wird,
- das Öffnen des Hochdruckversorgungsschiebers (14) verringert wird.

2. Steuerverfahren nach dem vorhergehenden Anspruch, wobei der Kreislauf außerdem Folgendes umfasst
- mindestens eine Turbine (20) mit geringerem Druck, die mit einem Stromgenerator (6) verbunden ist, wobei der geringere Druck niedriger ist als der Hochdruck der Hochdruckturbine (10),
- ein Regulierventil (21) mit geringerem Druck, das die Dampfversorgung der Turbine (20) mit geringerem Druck ausgehend von einem Überhitzer (22) mit geringerem Druck, der mit einem Speicherkessel (23) mit geringerem Druck assoziiert ist, steuert, wobei die Fluidversorgung des Speicherkessels (23) mit niedrigerem Druck von dem Dampfgenerator (25) mit niedrigerem Druck durch einen Versorgungsschieber (24) mit niedrigerem Druck gesteuert wird,
wobei das Verfahren **dadurch gekennzeichnet ist, dass** als Reaktion auf einen Mehrbedarf an elektrischer Leistung die Öffnung des Regulierventils (21) mit niedrigerem Druck erhöht wird.

3. Verfahren nach dem vorhergehenden Anspruch, **dadurch gekennzeichnet, dass** als Reaktion auf den Mehrbedarf an elektrischer Leistung die Öffnung des Versorgungsschiebers (24) mit geringerem Druck erhöht wird.

4. Steuerverfahren nach einem der vorhergehenden Ansprüche, wobei der Dampf in dem Hochdruckspeicherkessel (13) eine Temperatur zwischen 300 und 350 °C und eine volumenbezogene Masse zwischen 60 und 80 kg.m⁻³ aufweist, und wobei der Dampf in dem Speicherkessel (20) mit geringerem Druck eine Temperatur zwischen 200 und 250 °C und eine volumenbezogene Masse zwischen 7 und 11 kg.m⁻³ aufweist.

5. Steuerverfahren nach einem der vorhergehenden Ansprüche, wobei das Wärmekraftwerk zur Stromerzeugung ein Kraftwerk mit kombiniertem Zyklus ist, das eine Verbrennungsturbine (3) umfasst, deren Rauchgase Wärmeaustauscher (12, 15, 22, 25, 32, 35) des Kreislaufs (1) versorgen.

6. Steuerverfahren nach einem der vorhergehenden Ansprüche, wobei eine Turbine (20) mit geringerem Druck eine Mitteldruckturbine ist, die stromabwärts des Ausgangs der Hochdruckturbine (10) und stromaufwärts einer Niederdruckturbine (30) liegt.

7. Computerprogrammprodukt, das Programmcodeanweisungen für die Ausführung der Schritte des Verfahrens nach den vorhergehenden Ansprüchen, wenn das Programm auf einem Rechner ausgeführt wird, umfasst.

8. Wärmekraftwerk zur Stromerzeugung, wobei das Kraftwerk mindestens eine Wärmequelle (5) umfasst, um einem Zirkulationskreislauf (1) eines Arbeitsfluids Wärmeenergie zu liefern, wobei der Kreislauf mindestens Folgendes umfasst:
- eine Hochdruckturbine (10), die mechanisch mit einem Stromgenerator (6) verbunden ist,
- ein Hochdruckregulierventil (11), das die Dampfversorgung der Hochdruckturbine (10) ausgehend von einem Hochdrucküberhitzer (12) steuert, der mit einem Hochdruckspeicherkessel (13) assoziiert ist, wobei die Fluidversorgung des Hochdruckspeicherkessels (13) von einem Hochdruckdampfgenerator (15) von einem Hochdruckversorgungsschieber (14) gesteuert ist,
wobei das Kraftwerk **dadurch gekennzeichnet ist, dass** es Mittel zum Steuern des Hochdruckregulierventils (11) und Mittel zum Steuern des Hochdruckversorgungsschiebers (14) umfasst, und dass es derart konfiguriert ist, dass als Reaktion auf einen Mehrbedarf an elektrischer Leistung
- die Öffnung des Hochdruckregulierventils (11) erhöht wird,
- die Öffnung des Hochdruckversorgungsschiebers (14) verringert wird.

9. Kraftwerk nach dem vorhergehenden Anspruch, wobei der Kreislauf außerdem Folgendes umfasst
- mindestens eine Turbine (20) mit geringerem Druck, die mit einem Stromgenerator (6) verbunden ist, wobei der geringere Druck niedriger ist als der Hochdruck der Hochdruckturbine (10),
- ein Regulierventil (21) mit geringerem Druck, das die Dampfversorgung der Turbine (20) mit geringerem Druck ausgehend von einem Überhitzer (22) mit geringerem Druck, der mit einem Speicherkessel (23) mit geringerem Druck assoziiert ist, steuert, wobei die Fluidversorgung des Speicherkessels (23) mit geringerem Druck von einem Dampfgenerator (25) mit geringerem Druck von einem Versorgungsschieber (24) mit geringerem Druck gesteuert wird,
wobei das Kraftwerk **dadurch gekennzeichnet ist, dass** es Mittel zum Steuern des Regulierventils (21) mit geringerem Druck und Mittel zum Steuern des Versorgungsschiebers (24) mit geringerem Druck umfasst, und dass es derart konfiguriert ist, dass als Reaktion auf einen Mehrbedarf an elektrischer Leistung die Öffnung des Regulierventils (21) mit geringerem Druck erhöht wird.

10. Kraftwerk nach dem vorhergehenden Anspruch, **dadurch gekennzeichnet, dass** als Reaktion auf einen Mehrbedarf an elektrischer Leistung die Öffnung des Versorgungsschiebers (24) mit geringerem Druck erhöht wird.

## Claims

1. Method for controlling a thermal power plant for producing electrical energy, said power plant comprising at least one source of heat (5) for providing thermal energy to a working fluid circulation circuit (1), said circuit comprising at least:
- a high pressure turbine (10) mechanically connected to an electric generator (6),
- a high pressure regulator valve (11) controlling the supply of steam to said high pressure turbine (10) from a high pressure superheater (12) combined with a high pressure storage tank (13), the fluid supply to said high pressure storage tank (13) from a high pressure steam generator (15) being controlled by a high pressure feed valve (14),
with the method being **characterised in that** in response to a surplus electrical power requirement,
- the opening of the high pressure regulator valve (11) is increased
- the opening of the high pressure feed valve (14) is reduced.

2. Method for controlling as claimed in the preceding claim, wherein the circuit further comprises
- at least one turbine of lower pressure (20) connected to an electric generator (6), said lower pressure being lower than the high pressure of the high pressure turbine (10),
- a lower pressure regulator valve (21) controlling the supply of steam to said turbine of lower pressure (20) from a superheater of lower pressure (22) combined with a lower pressure storage tank (23), the fluid supply to said lower pressure storage tank (23) from a lower pressure steam generator (25) being controlled by a lower pressure feed valve (24),
said method being **characterised in that** in response to a surplus electrical power requirement, the opening of the lower pressure regulator valve (21) is increased.

3. Method as claimed in the preceding claim, **characterised in that** in response to the surplus electrical power requirement, the opening of the lower pressure regulator valve (24) is increased.

4. Method for controlling as claimed in any preceding claim, wherein the steam in the high pressure storage tank (13) has a temperature between 300 and 350 °C and a density between 60 and 80 kg.m⁻³, and wherein the steam in the lower pressure storage tank (20) has a temperature between 200 and 250 °C and a density between 7 and 11 kg.m⁻³.

5. Method for controlling as claimed in any preceding claim, wherein the thermal power plant for producing electrical energy is a combined cycle power plant, comprising a combustion turbine (3) of which the smoke supplies heat exchangers (12, 15, 22, 25, 32, 35) of the circuit (1).

6. Method for controlling according to one of the preceding claims, wherein a turbine of lower pressure (20) is an average pressure turbine located downstream of the outlet of the high pressure turbine (10) and upstream of a low pressure turbine (30).

7. Computer program product comprising program code instructions for the execution of the steps of the method according to the preceding claims when said program is executed on a computer.

8. Thermal power plant for producing electrical energy, said power plant comprising at least one source of heat (5) for providing thermal energy to a working fluid circulation circuit (1), said circuit comprising at least:
- one high pressure turbine (10) mechanically connected to an electric generator (6),
- one high pressure regulator valve (11) controlling the supply of steam to said high pressure turbine (10) from a high pressure superheater (12) combined with a high pressure storage tank (13), the fluid supply to said high pressure storage tank (13) from a high pressure steam generator (15) being controlled by a high pressure feed valve (14),
with the power plant **characterised in that** it comprises means for controlling the high pressure regulator valve (11) and means for controlling the high pressure feed valve (14), and **in that** it is configured in such a way that in response to a surplus electrical power requirement,
- the opening of the high pressure regulator valve (11) is increased
- the opening of the high pressure feed valve (14) is reduced.

9. Power plant as claimed in the preceding claim, wherein the circuit further comprises
- at least one turbine of lower pressure (20) connected to an electric generator (6), said lower pressure being lower than the high pressure of the high pressure turbine (10),
- a lower pressure regulator valve (21) controlling the supply of steam to said turbine of lower pressure (20) from a superheater of lower pressure (22) combined with a lower pressure storage tank (23), the fluid supply to said lower pressure storage tank (23) from a lower pressure steam generator (25) being controlled by a lower pressure feed valve (24),
with the power plant **characterised in that** it comprises means for controlling the lower pressure regulator valve (21) and means for controlling the lower pressure regulator valve (24), and **in that** it is configured in such a way that in response to a surplus electrical power requirement, the opening of the lower pressure regulator valve (21) is increased.

10. Power plant as claimed in the preceding claim, **characterised in that** in response to a surplus electrical power requirement, the opening of the lower pressure regulator valve (24) is increased.
